Europäisches Patentamt

European Patent Office

Office européen des brevets

(19)

(11) **EP 0 801 364 B1**

(12) **FASCICULE DE BREVET EUROPEEN**

(45) Date de publication et mention
de la délivrance du brevet:
**30.07.2003 Bulletin 2003/31**

(51) Int Cl.⁷: $G06T\ 17/20$

(21) Numéro de dépôt: **97400770.0**

(22) Date de dépôt: **03.04.1997**

(54) **Méthode pour générer un maillage 3D**

Vefahren zur Erzeugung einer dreidimensionalen Masche

Method for generating a 3D meshing

(84) Etats contractants désignés:
**DE GB IT NL**

(30) Priorité: **12.04.1996 FR 9604567**

(43) Date de publication de la demande:
**15.10.1997 Bulletin 1997/42**

(73) Titulaire: **Institut Français du Pétrole
92852 Rueil Malmaison Cédex (FR)**

(72) Inventeurs:
• **Bennis, Chakib
92500 Rueil-Malmaison (FR)**
• **Sassi, William
78100 Fourqueux (FR)**

(56) Documents cités:
**WO-A-95/30209**  **US-A- 5 333 248**
**US-A- 5 465 323**

• **RENARD P ET AL: "Three-dimensional geometric modeling of a faulted domain: the Soultz Horst example (Alsace, France)" COMPUTERS & GEOSCIENCES, NOV. 1994, UK, vol. 20, no. 9, pages 1379-1390, XP000612891 ISSN 0098-3004**
• **MALLET J L: "DISCRETE SMOOTH INTERPOLATION IN GEOMETRIC MODELLING" COMPUTER AIDED DESIGN, vol. 24, no. 4, 1 avril 1992 (1992-04-01), pages 178-191, XP000268836**

## Description

La présente invention concerne une méthode pour générer un maillage 3D dans le but de modéliser un corps quelconque dont la géométrie est connue et imposée a priori tel que par exemple une structure géologique en tenant compte fidèlement de sa géométrie dans toute sa complexité naturelle. Le maillage réalisé par la méthode s'accorde bien dans le cas d'une structure géologique, avec la position des interfaces entre les couches, avec les failles même de forme complexe, les biseaux et autres irrégularités de structure, en les représentant avec leur conformation réelle.

La méthode selon l'invention trouve des applications notamment pour la modélisation en géomécanique, pour la caractérisation des réservoirs : couches de sédiments, stratigraphie, et aussi pour la simulation des écoulements dans les bassins et réservoirs.

## I) ÉTAT DE LA TECHNIQUE

La modélisation d'une structure géologique est réalisée à partir d'un ensemble de données disponibles acquises soit par des mesures, soit par des analyses et des interprétations de données sismiques ou des diagraphies réalisées dans des puits. Ces données se présentent sous la forme d'un nuage de points entre lesquels, au mieux, il convient d'installer un maillage. La formation d'un maillage en 3D joue un rôle crucial pour faire des simulations numériques dans différentes applications géologiques. Beaucoup de recherches ont été menées sur le sujet principalement en ingénierie de réservoir en raison de ses applications dans le domaine pétrolier.

On connait de nombreuses techniques de maillage 3D pour des simulations numériques par éléments ou différences finis et des ensembles de logiciels de simulation créés pour leur mise en oeuvre qui sont adaptés à des applications et respectent des contraintes déterminées.

Il est connu pour certaines applications d'utiliser des maillages de type tétraédrique non structuré. Il est connu aussi de faire du maillage hexaédrique de peau ou de surface et de répartir des points dans le maillage soit par interpolation transfinie, soit encore par résolution d'équations aux dérivées partielles. Les surfaces sont généralement créées à partir de fonctions paramétriques et les points du maillage sont obtenus simplement par échantillonnage de ces fonctions. Une telle méthode ne convient pas généralement pour des applications dans les géosciences où les volumes à modéliser ont des formes le plus souvent très complexes, difficiles à traduire par des fonctions paramétriques compte-tenu de la précision qui est recherchée. Aussi préfère t-on approcher les formes complexes par des éléments de surface triangulés.

Différentes techniques de maillage appliquées à la modélisation de réservoir, sont décrites par exemple dans :

- Georges P.L. : "Génération Automatique de Maillages", Editions Masson, 1991;

- Guérillot D.R. et al: An ineractive 3D Mesh Builder for Fluid Flow Reservoir Simulation; in SPE - Computer Applications, Dec. 1993;

- Aziz K.; Reservoir Simulation Grids : Opportunities and problems. SPE-JPT, July 1993; ou

- Heineman Z.E. et al : Gridding Techniques in Reservoir Simulation. Intl Forum on Reservoir Simulation. Alpbach Austria, Sept. 12-16, 1988.

Cependant, la plupart des techniques de maillage connues, et de là les simulations qui en résultent, ne conviennent bien que pour modéliser des structures géologiques relativement simples. Les irrégularités géologiques courantes dans les zones-réservoir modélisées, telles que les couches ayant de grandes variations d'épaisseur, les failles ou les biseaux, sont rarement pris en compte ou alors seulement sous une forme grandement simplifiée. Le document RENARD P ET AL: 'Three-dimensional geometric modeling of a faulted demain: the Soultz Horst example (Alsace, France)' COMPUTERS & GEOSCIENCES, NOV. 1994, UK, vol. 20, no. 9, pages 1379-1390, prend en compte les irrégularités géologiques en prévoyant un traitement spécifique des volumes des couches présentant des irrégularités par construction d'une surface triangulée qui passe au mieux par les données existantes et dont la géométrie s'accorde avec la configuration géologique.

Dans les modèles maillés obtenus dans le cadre des géosciences, les failles apparaissent verticalement; au mieux, elles sont inclinées et planes. Or il est important de rendre fidèlement, la géométrie en 3D des sédiments car ils possèdent des caractéristiques physiques propres, et aussi la géométrie des failles et autres discontinuités mécaniques.

La méthode selon l'invention permet de générer un maillage 3D respectant la géométrie d'une zone d'un milieu complexe dont la géométrie est connue et imposée a priori, tel qu'une structure géologique, dans le but de réaliser un modèle représentatif de ce milieu. La structure est définie à partir de données disponibles acquises soit par des mesures, soit par des analyses et des interprétations de données sismiques ou des diagraphies réalisées dans des puits. Elle comporte une modélisation préalable des limites (bords de la zone, discontinuités ou failles par exemple) par des surfaces triangulées, enveloppant au mieux ces limites, et un fractionnement de la zone d'étude suivant en blocs ayant au plus six faces, dont les faces correspondent à des discontinuités ou des failles principales de la zone préalablement triangulées.

Elle est caractérisée en ce qu'elle comporte :

- la subdivision de chaque bloc en un ensemble de cellules élémentaires nécessaires pour modéliser la zone par éléments finis, par une réticulation en 3D de chacun des différents blocs obtenus, subdivision qui comprend :

  a) le maillage de chacune des faces du bloc par interpolation à partir de ses bords, de façon à créer une grille intermédiaire, suivi d'une projection sur la surface triangulée des noeuds de cette grille intermédiaire suivant une direction définie (perpendiculairement à elle-même par exemple);

  b) le peuplement en noeuds de grille de chaque bloc dans son épaisseur, par une méthode d'interpolation à partir des noeuds des différentes grilles formées sur les différentes faces triangulées de chaque bloc, et

  c) un réarrangement dans le positionnement des noeuds des cellules élémentaires créées, obtenu (de façon itérative, généralement) par relaxation dans le positionnement des noeuds, en fonction de critères prédéfinis tels que la régularité, le choix de la taille relative des différentes cellules et le mode de progression de leurs tailles, la direction de projection etc.

Chaque bloc étant ainsi réticulé en 3D, on peut procéder à un réassemblage ou réempilement de tous les blocs.

On peut procéder successivement à une première opération de relaxation dans le positionnement des noeuds sur chacune des différentes faces triangulées, le peuplement en noeuds internes étant effectué à partir des grilles relaxées, et ensuite à une deuxième opération de relaxation dans le positionnement de ces noeuds internes.

De préférence, la première opération de relaxation est effectuée par des phases itératives de relaxation-projection.

La méthode selon l'invention permet d'obtenir un modèle qui respecte très précisément la géométrie souvent complexe de structures géologiques telles que des champs pétrolifères, ce qui a pour effet que les simulations qui peuvent être faites à partir de ce modèle rendent plus fidèlement compte des phénomènes. La méthode utilisée permet en outre une économie très importante de temps de calcul pour réaliser les opérations de maillage 3D habituellement très longues avec les méthodes existantes.

D'autres caractéristiques et avantages de la méthode selon l'invention, apparaîtront à la lecture de la description ci-après de modes de réalisation décrits à titre d'exemples non limitatifs, en se référant aux dessins annexés où :

- les Fig. 1 et 2 montrent des exemples de relaxation-projection sur un maillage surfacique 4X4;

- la Fig.3 montre un cube déformé avec des faces triangulées;

- la Fig.4 montre l'enveloppe externe d'un cube maillé;

- les Fig.5 et 6 montrent les surfaces internes d'un cube maillé respectivement avant et après relaxation;

- la Fig.7 montre des courbes relevées sur cinq coupes d'une structure géologique de très grandes dimensions, sur laquelle la méthode selon l'invention a été testée, qui constituent une partie des données initiales dont on dispose, sur cette structure;

- la Fig.8 montre d'autres données initiales sur la même structure, en l'occurrence, des cartes d'isobathes et les emplacements de 4 puits;

- la Fig.9 montre une modélisation surfacique ( base de surfaces triangulées) de la structure géologique étudiée;

- la Fig.10 montre un exemple de découpage de la structure en blocs;

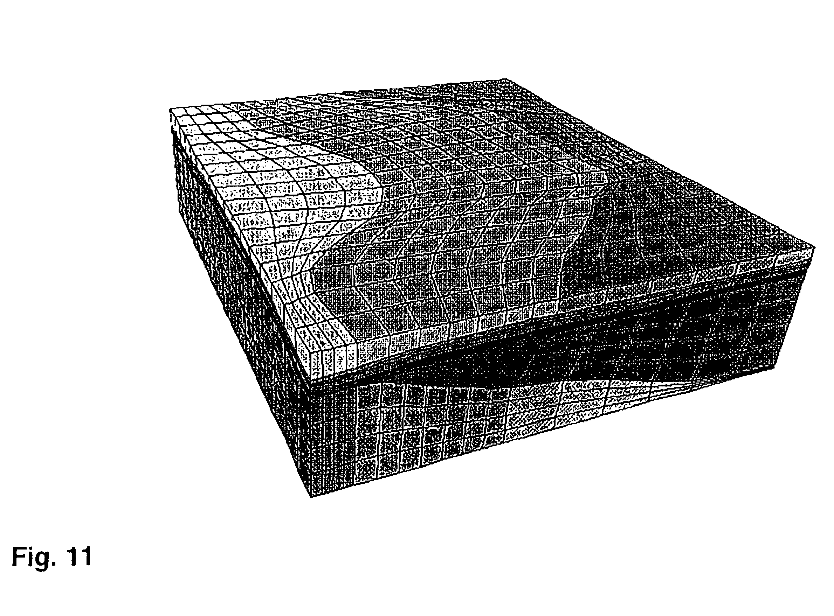

- la Fig.11 montre le résultat d'un maillage bloc par bloc de l'enveloppe externe de la structure géologique;

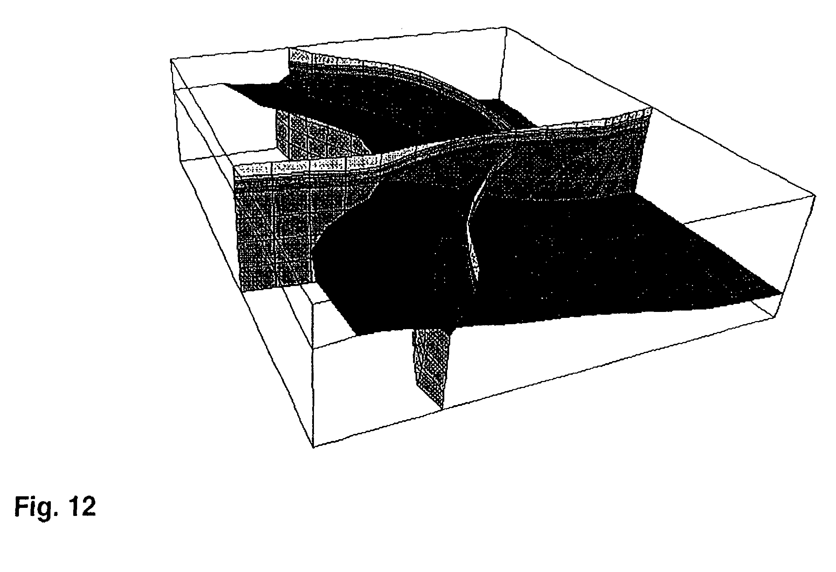

- la Fig.12 montre le résultat d'un maillage bloc par bloc des surfaces internes de la structure géologique;

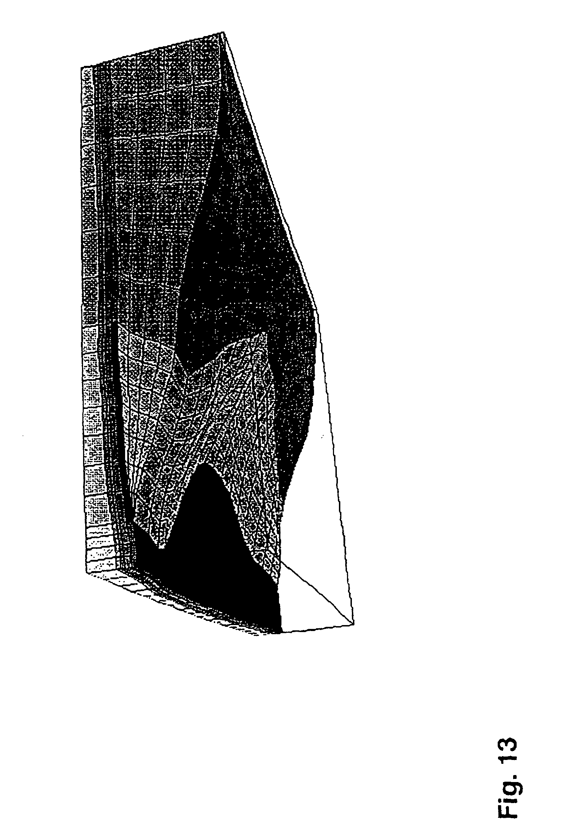

- la Fig.13 illustre à titre d'exemple comment on prend en compte un biseau dans le maillage de la structure géologique;

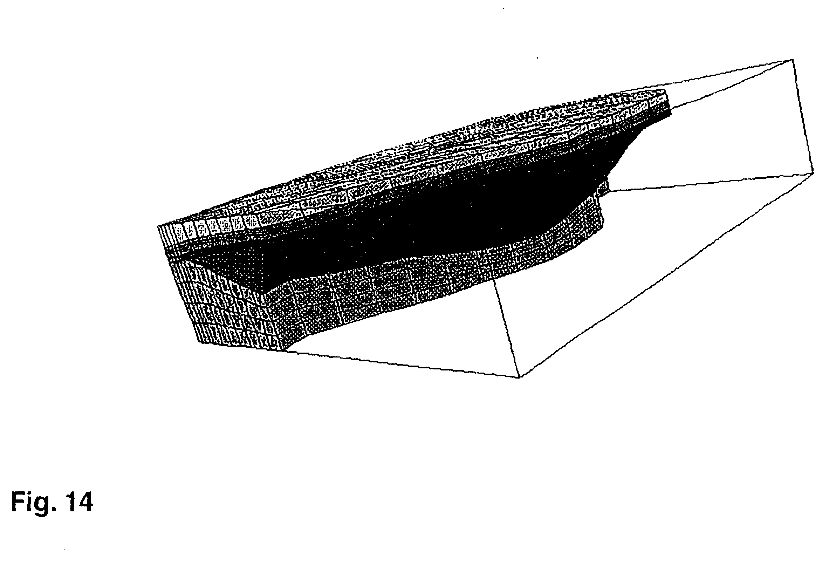

- la Fig.14 illustre à titre d'exemple comment on prend en compte une faille dans le maillage de la structure géologique;

- la Fig.15 illustre la méthode d'interpolation 2D de Coons;

- la Fig.16 montre les éléments pris en compte dans la méthode d'interpolation 3D de Coons; et

- la Fig.17 illustre le mode de relaxation-projection des noeuds de maille.

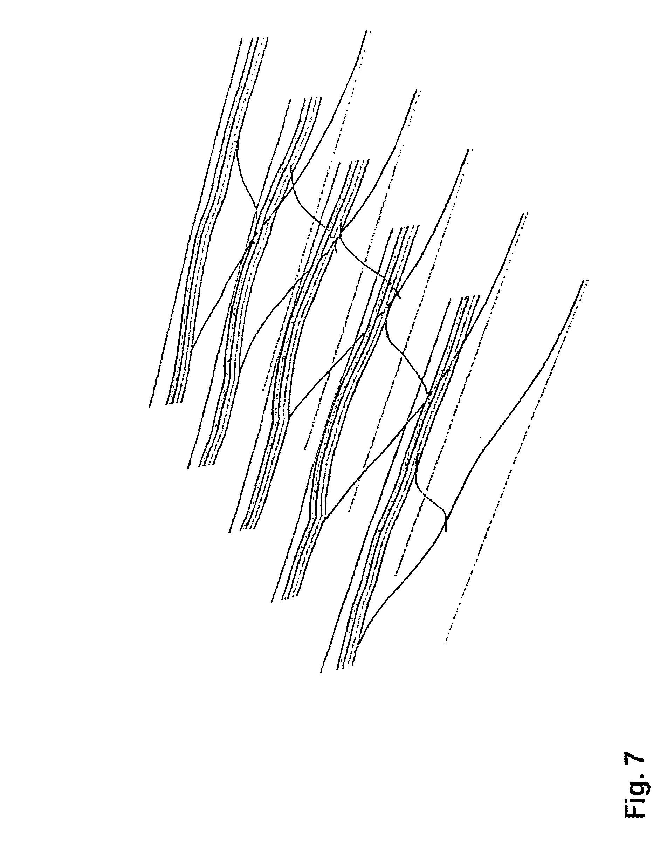

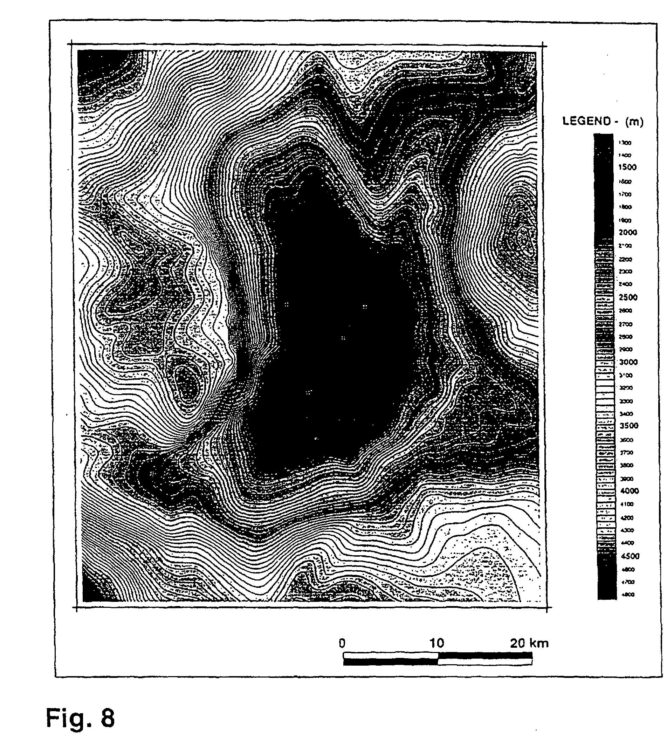

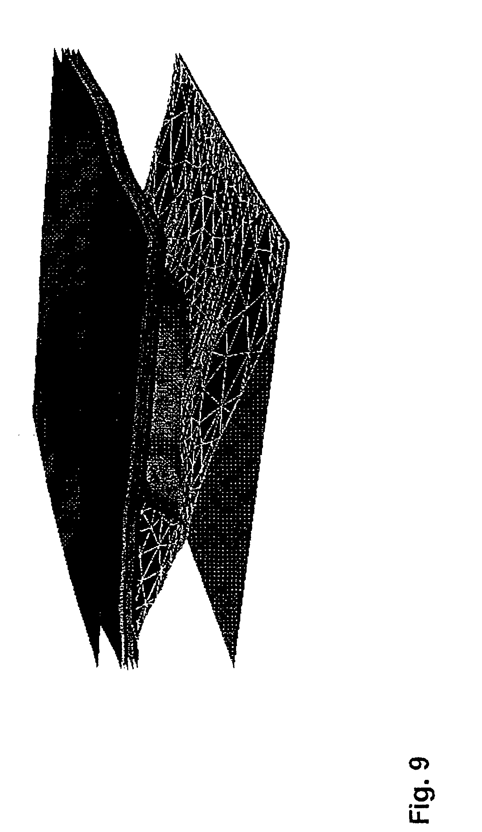

La structure géologique de grandes dimensions illustrée par les Fig.7-10. correspond à un dome anticlinal comportant six interfaces entre des sédiments.

La réalisation d'un maillage en 3D par éléments finis d'une zone à partir d'un ensemble de données initiales connues pour la zone : interfaces entre différentes couches ou horizons, failles principales, carte en courbes de niveau avec les emplacements de puits passe par une succession d'étapes qui seront décrites ci-après.

I) Modélisation des limites ou bords de la zone étudiée et de ses principales discontinuités.

On réalise une modélisation des surfaces : bords, interfaces, failles en utilisant une logiciel spécialisé connu tel que GOCAD (marque déposée) sous la forme d'une juxtaposition continue d'éléments de surface triangulaires. Dans un premier temps on forme une ébauche qui s'adapte au mieux aux données initiales. De manière itérative, on déplace les sommets de la surface en utilisant un logiciel d'interpolation et on densifie localement les éléments de surface triangulaires, de façon à plaquer au mieux la surface sur le semis de points (données d'entrée). Les éléments de surface ainsi créés ne se raccordent généralement pas comme ils le devraient : les interfaces ne sont pas limitées aux intersections et au bord du domaine d'étude et elles peuvent se croiser en débordant. On calcule alors les lignes d'interception entre surfaces et on limite celles-ci aux courbes d'intersection. La Fig 7 montre le résultat final de cette modélisation des limites de la structure et l'on peut remarquer que la plupart des triangles des surfaces triangulées du biseau sont localisés dans les régions de forte courbure.

A ce stade, il n'est pas encore possible de produire un maillage 3D tenant compte des contraintes géologiques et numériques. Pour y parvenir, on procède à un fractionnement de la zone.

II) Fractionnement de la zone étudiée

On découpe d'abord la zone en macro-blocs ayant au plus six faces. Il s'agit généralement de blocs de forme hexaédrique (à six faces), mais le nombre de faces peut être inférieur à six et descendre jusqu'à deux. Dans ce cas, pour les besoins de la méthode, le bloc est quand même considéréré comme un block hexaédrique mais ayant des faces dégénérées (réduites à un point ou à une courbe). Le mode de découpage est généralement suggéré par la géométrie des horizons, des principales failles et leur interaction. Pour constituer ces macro-blocs 3D, on a besoin parfois d'introduire des frontières artificielles. C'est nécessaire par exemple quand un bloc a plus de six faces naturelles et ne satisfait donc pas à la règle choisie d'être au plus hexahédrique. Dans un tel cas, on réunit deux faces en une face complexe pour satisfaire le critère, ou bien on introduit des surfaces de coupure artificielles.

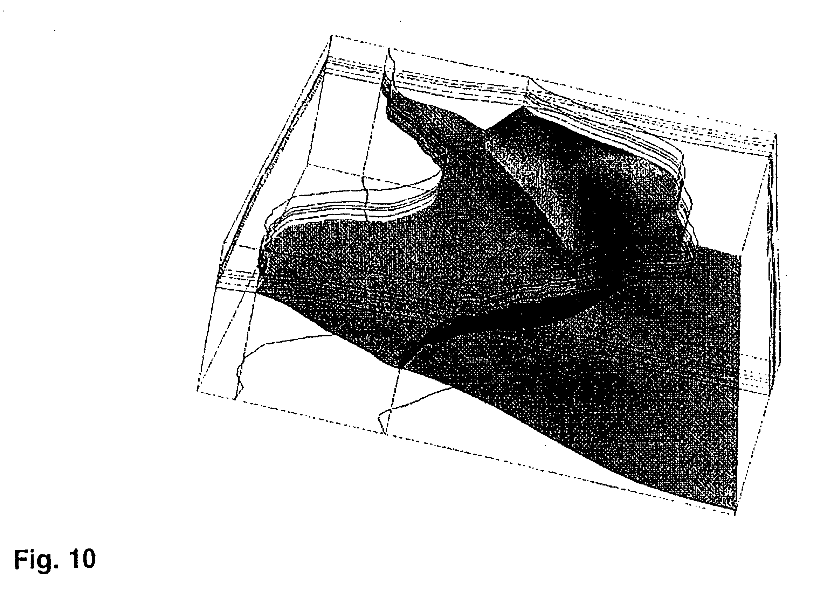

Un exemple de découpage de la structure géologique étudiée en macro-blocs est montré à la Fig. 10, où l'on a extrapolé la gaille jusqu'à la frontière de la structure et verticalement projeté l'intersection du biseau sur les autres surfaces.

III) Maillage

On réalise une réticulation ou maillage en 3D séparément de chacun de ces macro-blocs de façon à le subdiviser en blocs élémentaires qui vont former les cellules pour la modélisation par éléments finis recherchées. Cette opération est réalisée en deux temps.

1) Maillage des faces

a) on crée tout d'abord une grille sur chacune des cinq ou six faces de chaque macro-bloc. Pour cela, on forme une grille intermédiaire par interpolation à partir des quatre bords de la face, en utilisant la méthode d'interpolation transfinie de Coons dont le principe est rappelé ci-après.

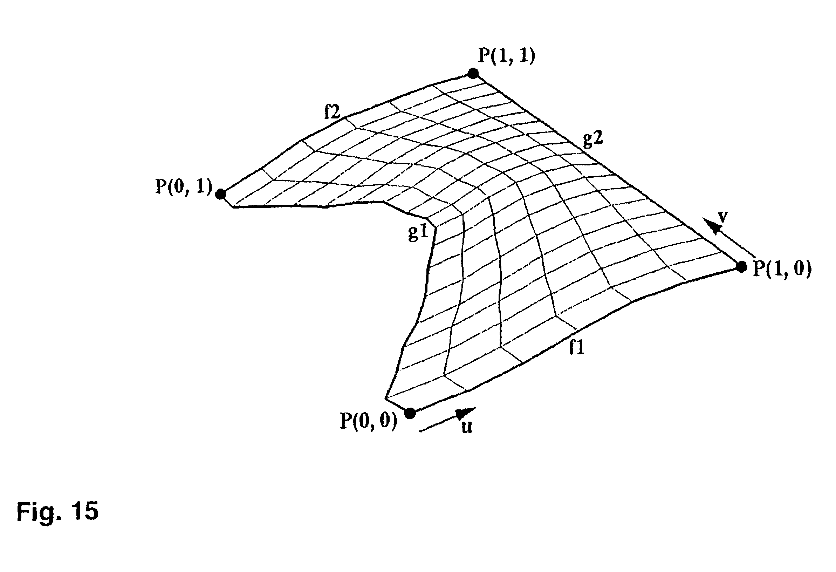

Etant donné quatre courbes paramétriques f1(u), f2(u), g1(v), g2(v) (0 $\leq$ u, v $\leq$ 1) définissant quatre bords jointifs (Fig.15), on introduit une formule pour calculer la surface la plus tendue qui passe par les quatre bords (qui interpole ces bords) :

$$S(u,v) = (1-u)g1(v) + ug2(v) + (1-v)f1(u) + vf2(u) - [(1-u)(1-v)P(0,0) + (1-u)vP(0,1) + u(1-v)P(1,0) + uvP(1,1)] \quad (1)$$

Les sommets P(i, j) sont les quatre coins de la surface.

On peut alors obtenir un maillage régulier NxM de cette surface par simple échantillonnage en prenant pour sommets les points S(i, j) correspondant aux ui = i/(N-1), vj =j/(M-1), i=0 à N-1, j=0 à M-1. La formule 1 restreinte au points du maillage devient :

$$S(i,j) = (1-\tfrac{i}{N-1})g1(j) + \tfrac{i}{N-1}g2(j) + (1-\tfrac{j}{M-1})f1(i) + \tfrac{j}{M-1}f2(i)$$
$$-[(1-\tfrac{i}{N-1})(1-\tfrac{j}{M-1})P(0,0) + (1-\tfrac{i}{N-1})\tfrac{j}{M-1}P(0,1) \quad (2)$$
$$+ \tfrac{i}{N-1}(1-\tfrac{j}{M-1})P(1,0) + \tfrac{i}{N-1}\tfrac{j}{M-1}P(1,1)]$$

Dans le cas illustré, les courbes f1, f2, g1, g2, sont obtenues à partir du logiciel GOCAD précité et sont donc des lignes brisées. Pour obtenir un maillage régulier MxN, on échantillonne régulièrement (en abscisse curviligne ou longueur de segment) les courbes f1 et f2 en N points, et les courbes g1, g2 en M points, puis on applique la formule (2). On peut tout aussi bien obtenir un maillage à progression géométrique sur chaque direction, simplement en imposant cette contrainte au niveau du rééchantillonnage des courbes.

Ce maillage intermédiaire sauf cas exceptionnel ne convient pas car il n'y a pas de raison qu'il coincide à ce stade avec la surface qui a préalablement été triangulée par le logiciel de surfaçage. L'ajustement nécessaire consiste à projeter les noeuds de la grille intermédiaire sur la surface triangulée orthogonalement à celle-ci, ou suivant d'autres directions , de façon à obtenir une nouvelle grille avec des noeuds placés sur la surface triangulée. Quand les quatre courbes frontières sont régulièrement échantillonnées, la méthode d'interpolation de Coons présente l'avantage de produire une grille régulière en ce sens que sur chaque courbe isoparamétrique tous les segments échantillonnés ont la même longueur. Plus généralement la méthode de Coons conserve les rapports de taille entre éléments consécutifs dans une direction données. Ceci permet d'avoir par exemple des maillages réguliers ou respectant certaines progressions dans la taille des mailles. Cependant la grille obtenue par cette méthode connue perd sa régularité (ou le critère recherché) une fois qu'elle est projetée sur la surface triangulée.

2) Réarrangement des noeuds de face

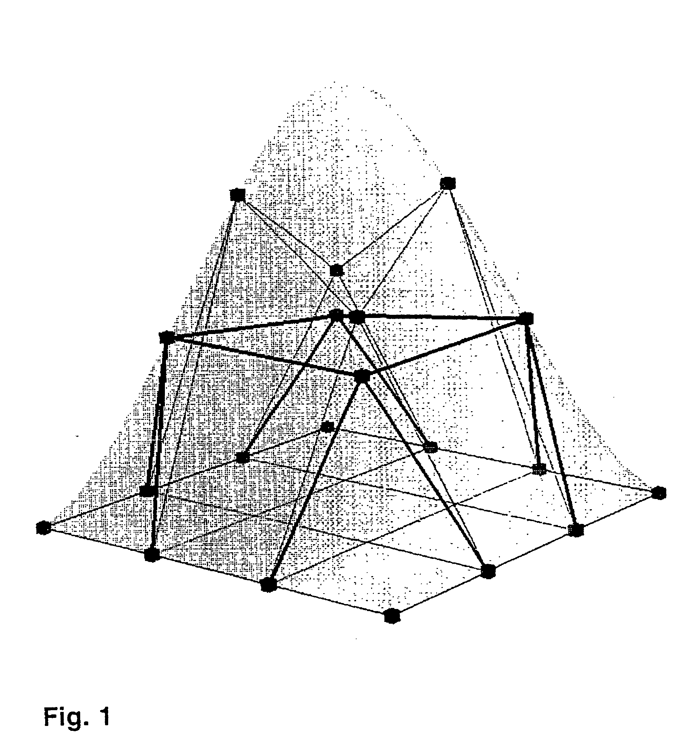

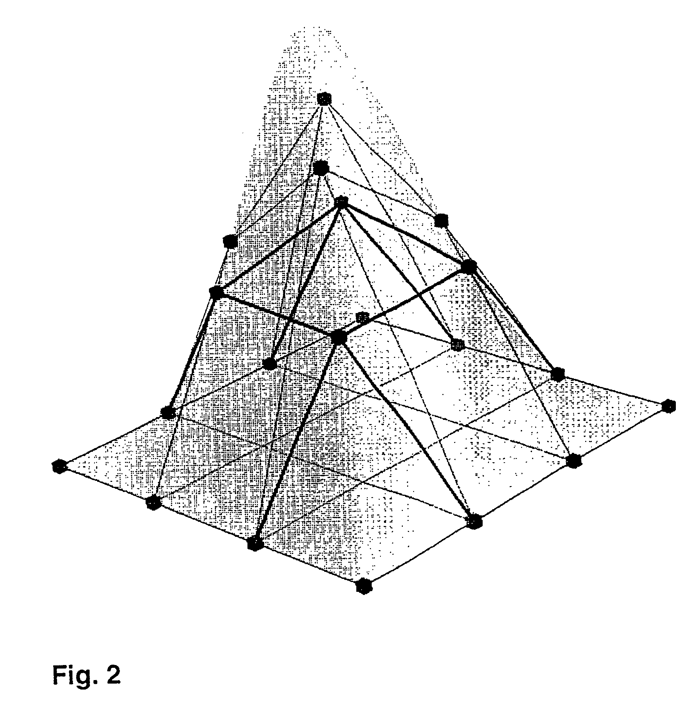

Pour retrouver le critère désiré dans la distribution des noeuds de la grille projetée, une régularité satisfaisante par exemple, il faut déplacer les noeuds du maillage sur la surface triangulée. Pour ce faire, on procède à une relaxation-projection de la grille par ajustements successifs comme indiqué ci-après (dans le cas où le critère est la régularité), en relation avec les Fig.1, 2.

Étant donné un bloc maillé, le but cette relaxation est de rendre son maillage le plus régulier possible au sens où n'importe quelle courbe isoparamétrique du maillage soit régulièrement échantillonnée. Pour ce faire. on déplace de façon itérative tout point du maillage de manière à le positionner au mieux à égale distance de ses deux voisins sur chacune des trois directions (u,v,w) de voisinage. Soit P le point qu'on cherche à déplacer. Pour chaque direction i, (i = u, v,w) (Fig.17), on trouve le point Pi qui se situe à égale distance des deux voisins de P sur la courbe de direction i. (i = u, v,w). Le point P est alors remplacé par le barycentre des trois points Pi (i = u, v, w).

Après avoir déplacé tous les points du maillage de la sorte, ceux-ci ne sont plus sur la surface triangulée. On les projette alors à nouveau sur la surface triangulée et on répète le processus de relaxation-projection jusqu'à atteindre la régularité souhaitée.

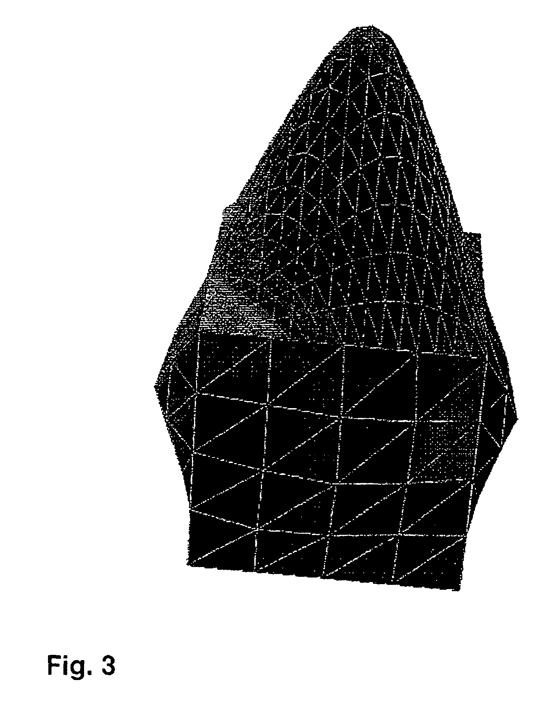

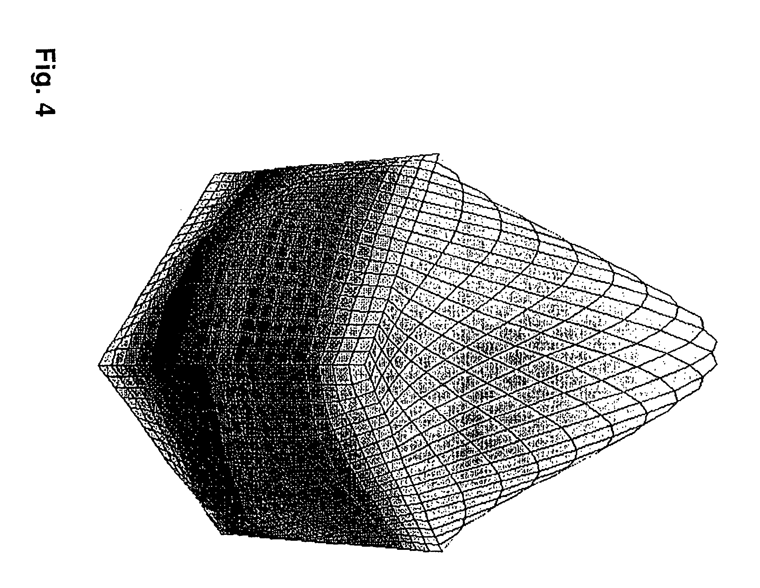

Ceci est illustré sur l'exemple des Fig. 1, 2, correspondant à une face du cube déformé de la Fig. 3 qui est un exemple synthétique permettant de bien illustrer les différentes étapes de la méthode. Cette surface a été obtenue par simple déformation d'une face carrée en préservant ses bords ( le bord de la surface reste un carré). Sur ces figures, on peut voir trois maillages 4X4. Le premier est un maillage plat issu de l'interpolation de Coons appliquée aux quatre bords (formant un carré). Le deuxième est le maillage fin dont les noeuds sont obtenus par projection de ceux du premier maillage. On constate que ce maillage a perdu de sa régularité. Le troisième est le maillage régulier tracé en gras et dont les noeuds sont situés sur la surface. Il a été obtenu à partir du deuxième maillage après une série de projections et relaxations. La Fig. 4 montre le résultat de ces opérations appliquées à l'ensemble des faces du cube déformé.

3) Peuplement en noeuds de grille de chaque bloc dans son épaisseur :

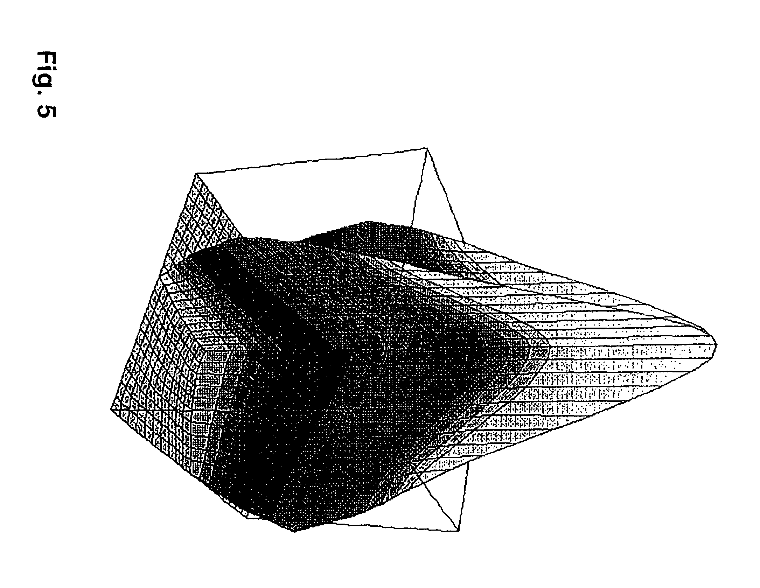

Pour prolonger en profondeur les grilles formées sur les faces des blocs (Fig.5), on utilise une généralisation au volume de la méthode d'interpolation transfinie précédente.

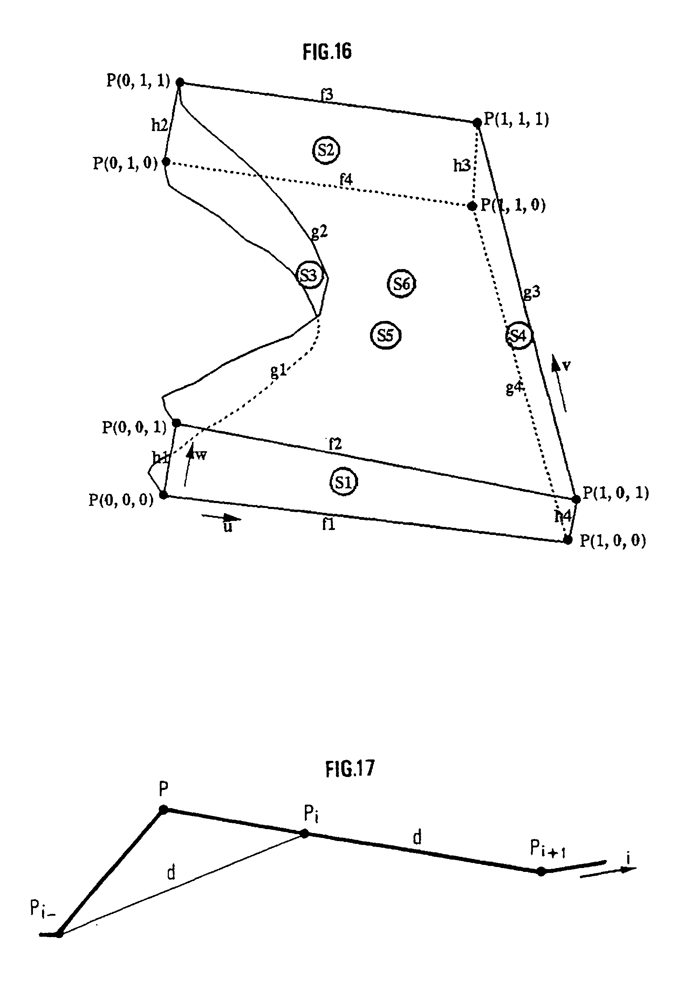

Étant donné 12 courbes paramétriques f1(u), f2(u ), f3(u), f4(u), g1(v), g2(v), g3(v), g4(v), h1(w), h2(w), h3 (w), h4(w) (0 $^2$ u, v, w $^2$ 1) définissant les 12 bords d'un bloc tel que montré dans la Fig.16, une généralisation de la formule de Coons fournit une paramétrisation volumique à l'intérieur du bloc. La formule de Coons dans le cas volumique est la suivante :

$$
\begin{aligned}
V(u, v, w) = {} & (1-v)(1-w)f1(u) + (1-v)wf2(u) + vwf3(u) + v(1-w)f4(u) \\
& -(1-u)(1-w)g1(v) + (1-u)wg2(v) + uwg3(v) + u(1-w)g4(v) \\
& +(1-u)(1-v)h1(w) + (1-u)vh2(w) + uvh3(w) - u(1-v)h4(v) \\
& \hspace{8cm} + C(u, v, w)
\end{aligned} \tag{3}
$$

avec

$$
\begin{aligned}
C(u,v,w) = {} & -2[(1-u)(1-v)(1-w)P(0,0,0) + (1-u)(1-v)wP(0,0,1) \\
& +(1-u)v(1-w)P(0,1,0) + (1-u)vwp(0,1,1) + u(1-v)(1-w)P(1,0,0) \\
& +u(1-v)wP(1,0,1) + uv(1-w)P(1,1,0) + uvwP(1.1.1)]
\end{aligned}
$$

Les sommets P(i, j, k) (i, j, k= 0 ou 1 sur la Fig 16) sont les 8 coins du bloc.

En combinant les équations (1) et (3) on aboutit à une expression de la formule de Coons dans le cas volumique en fonction des 6 surfaces de bord du bloc, S1(u, w), S2(u,w), S3(v,w), S4(v,w), S5(u,v), S6(u,v). Mais ici, les surfaces sont aussi supposées être obtenues par interpolation de Coons à partir de leurs courbes de bord. La formule est la suivante :

$$
\begin{aligned}
V(u, v, w) = {} & \frac{1}{2}[(1-v)S1(u, w) + vS2(u, w) + (1-u)S3(v, w) + uS4(v, w) \\
& +(1-w)S5(u, v) + wS6(u, v)] + \frac{1}{4}C(u, v, w)
\end{aligned} \tag{4}
$$

Un échantillonnage quelconque de V(u,v,w) fournit alors un maillage EF du bloc.

Cette interpolation en profondeur donnerait une distribution régulière de noeuds si elle était appliquée à partir des noeuds des grilles formés sur les différentes faces du bloc. Ce n'est pas le cas et la distribution obtenue est généralement irrégulière car la méthode d'interpolation en profondeur est appliquée aux noeuds reportés par relaxation sur les surfaces triangulées, comme décrit dans l'étape 2 précédente.

4) Réarrangement des noeuds de bloc

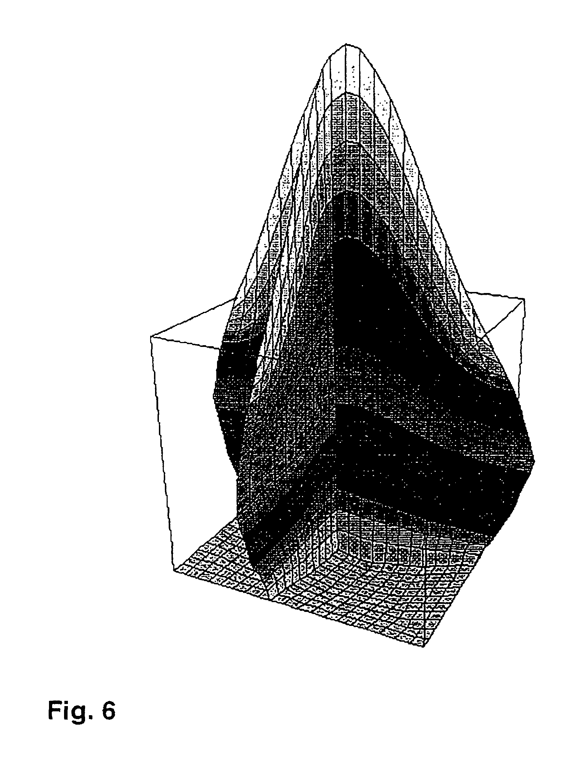

Aussi, pour retrouver une régularité suffisante (ou respecter un autre critère choisi), la méthode selon l'invention comporte également une relaxation de la grille 3D de la manière indiquée précédemment. Les Fig.5, 6 montrent le maillage interne du cube déformé avant et après relaxation. Le maillage de la Fig.6, on le note, possède une régularité bien meilleure que le maillage de la Fig.5.

Quand chacun des blocs précédents de la structure étudiée a été convenablement maillé en volume, on réassemble tous ces macro-blocs après leur réticulation 3D.

La méthode qui vient d'être décrite peut être utilisée pour mailler des hétérogénéités diverses telles qu'un chenal ou encore pour mailler radialement un puits dévié.

On a décrit des modes de réalisation de la méthode appliquée au maillage d'une structure géologique. On ne sortirait pas du cadre de l'invention, cependant, en utilisant la méthode pour le maillage de tout corps ou structure dont la géométrie est connue et imposée a priori.

**Revendications**

**1.** Méthode pour générer un maillage 3D dans une structure dont la géométrie est connue et imposée a priori telle que par exemple une structure géologique définie à partir de données disponibles acquises par des mesures, par des analyses et/ou des interprétations de données sismiques ou des diagraphies réalisées dans des puits au travers de la structure, dans le but de réaliser un modèle représentatif de cette structure, comportant une modélisation préalable des limites par des surfaces triangulées, enveloppant au mieux ces limites, et un fractionnement de la zone en blocs ayant au plus six faces, dont les faces correspondent à des discontinuités ou des failles principales de la zone préalablement triangulées, la méthode étant **caractérisée en ce qu'**elle comporte :

- la subdivision de chaque bloc en un ensemble de cellules élémentaires nécessaires pour modéliser la zone par éléments finis, par une réticulation ou maillage en 3D de chacun des différents blocs obtenus, subdivision qui comprend :

   a) le maillage de chacune des faces du bloc par interpolation à partir de ses bords, de façon à créer une grille intermédiaire, suivi d'une projection sur la surface triangulée des noeuds de cette grille intermédiaire suivant une direction définie, de façon à générer des grilles de face;

   b) le peuplement de chaque bloc en noeuds internes par interpolation à partir des noeuds des différentes grilles formées sur les différentes faces triangulées de chaque bloc, de façon à obtenir une distribution régulière des noeuds dans le volume de chaque bloc; et

   c) un réarrangement dans le positionnement des noeuds des cellules élémentaires créées, obtenu par relaxation dans le positionnement des noeuds. en fonction de critères prédéfinis.

**2.** Méthode selon la revendication 1, **caractérisée en ce que** l'on procède successivement à une première opération de relaxation dans le positionnement des noeuds sur chacune des différentes faces triangulées, le peuplement en noeuds internes étant effectué à partir des grilles relaxées, et ensuite une deuxième opération de relaxation dans le positionnement de ces noeuds internes.

**3.** Méthode selon la revendication précédente, **caractérisée en ce que** l'on réalise la première opération de relaxation par des phases itératives de relaxation-projection.

**4.** Méthode selon l'une des revendications 1 ou 2 ou 3, caractérisée en ce l'on choisit comme direction de projection, une direction perpendiculaire à la grille intermédiaire.

**5.** Méthode selon l'une des revendications précédentes, **caractérisée en ce que** l'on utilise un mode d'interpolation de type transfini.

**6.** Méthode selon l'une des revendications précédentes, **caractérisée en ce que** l'on réarrange le positionnement des noeuds des cellules élémentaires créées de façon à obtenir des maillages réguliers.

**7.** Méthode selon l'une des revendications 1 à 5, **caractérisée en ce que** l'on réarrange le positionnement des noeuds des cellules élémentaires créées de façon à obtenir un mode déterminé de progression de la taille des mailles.

**8.** Méthode selon l'une des revendications précédentes, **caractérisée en ce que** l'on procède à un réassemblage de tous les blocs.

**Patentansprüche**

**1.** Verfahren zum Erzeugen eines 3D-Netzwerkes in einer Struktur, deren Geometrie bekannt und a priori vorgeschrieben ist, wie zum Beispiel eine geologische Struktur, die aus verfügbaren Daten definiert ist, welche durch Messungen, durch Analysen und/oder Interpretationen seismischer Daten oder Diagraphien aufgenommen sind, welche in Bohrlöchern entlang der Struktur realisiert sind, mit dem Ziel, ein für diese Struktur repräsentatives Modell zu verwirklichen, umfassend eine vorherige Modellierung der Grenzen durch aus Dreiecken zusammengesetzte Oberflächen, welche diese Grenzen am besten umhüllen, und eine Fraktionierung der Zone in Blöcke mit höchstens sechs Flächen, deren Flächen Hauptdiskontinuitäten oder Hauptverwerfungen der zuvor aus Dreiecken zusammengesetzten Zone entsprechen, wobei das Verfahren **dadurch gekennzeichnet ist, dass** es umfasst:

- die Unterteilung jedes Blockes in eine Zusammenstellung von Elementarzellen, die notwendig sind, um die Zone durch Endelemente durch eine Vernetzung oder 3D-Netzwerk von jedem der verschiedenen erhaltenen Blöcke zu modellieren, welche Unterteilung umfasst:

   a) Das Netzwerk von jeder der Flächen des Blocks durch Interpolation ausgehend von seinen Grenzen derart, dass ein Zwischengitter erzeugt wird, gefolgt von einer Projektion der Knoten dieses Zwischengitters auf die aus Dreiecken zusammengesetzten Fläche gemäß einer definierten Richtung, derart, dass Flächengitter erzeugt werden;

   b) die Population jedes Blockes mit inneren Knoten durch Interpolation aus Knoten von verschiedenen gebildeten Gittern auf die verschiedenen aus Dreiecken zusammengesetzten Flächen jedes Blocks, derart, dass eine regelmässige Verteilung der Knoten in dem Volumen jedes Blockes erhalten wird; und

   c) Einer Wiederanordnung in der Positionierung der Knoten der erzeugten Elementarzellen, erhalten durch Entspannung in der Positionierung der Knoten in Abhängigkeit vorgegebener Kriterien.

**2.** Verfahren nach Anspruch 1, **dadurch gekennzeichnet, dass** man aufeinander folgend zu einem ersten Entspannungsvorgang in der Positionierung der Knoten auf jeder der verschiedenen aus Dreiecken zusammengesetzten Flächen übergeht, wobei die Population mit inneren Knoten ausgehend von den entspannten Gittern durchgeführt wird und man anschließend zu einem zweiten Entspannungsvorgang in der Positionierung dieser inneren Knoten übergeht.

**3.** Verfahren nach dem vorhergehenden Anspruch, **dadurch gekennzeichnet, dass** man den ersten Entspannungsvorgang durch iterative Relaxations-Projektions-Phasen durchführt.

**4.** Verfahren nach einem der Ansprüche 1 oder 2 oder 3, **dadurch gekennzeichnet, dass** man als Projektions-Richtung eine Richtung wählt, die senkrecht zum Zwischengitter liegt.

**5.** Verfahren nach einem der vorhergehenden Ansprüche, **dadurch gekennzeichnet, dass** man einen Interpolationsmodus vom transfiniten Typ verwendet.

**6.** Verfahren nach einem der vorhergehenden Ansprüche, **dadurch gekennzeichnet, dass** man die Positionierung der Knoten der erzeugten Elementarzellen derart wiederanordnet, dass regelmäßige Netzwerke erhalten werden.

**7.** Verfahren nach einem der Ansprüche 1 bis 5, **dadurch gekennzeichnet, dass** man die Positionierung der Knoten der erzeugten Elementarzellen derart wiederanordnet, dass ein vorgegebener Progressionsmodus des Umfangs der Maschen erhalten wird.

**8.** Verfahren nach einem der vorhergehenden Ansprüche, **dadurch gekennzeichnet, dass** man zu einem erneuten Zusammensetzen aller Blöcke übergeht.

**Claims**

1. Method for generating a 3D mesh in a structure whose geometry is known and imposed *a priori*, such as for example a geological structure defined from available data acquired by measurements, by analyses and/or interpretations of seismic data or logs produced in bore holes through the structure, with the object of producing a representative model of this structure, comprising prior modelling of the limits by triangulated surfaces, enveloping these limits as well as possible, and splitting of the zone into blocks having at most six faces, the faces of which correspond to previously triangulated major faults or discontinuities in the zone, the method being *characterised in that* it comprises:

   - subdivision of each block into a set of elementary cells necessary to model the zone by finite elements, by creating a 3D lattice or mesh from each of the different blocks obtained, said subdivision comprising:

       a) creating a mesh from each of the faces of the block by interpolation from its edges so as to create an intermediate grid, followed by projection onto the triangulated surface of the nodes of this intermediate grid in a defined direction so as to generate face grids;

       b) population of each block with internal nodes by interpolation from the nodes of the different grids formed on the different triangulated faces of each block so as to obtain a uniform distribution of the nodes in the volume of each block; and

       c) rearrangement in the positioning of the nodes of the elementary cells created obtained by relaxation in the positioning of the nodes as a function of predefined criteria.

2. Method according to claim 1, *characterised by* successively a first operation for relaxation in the positioning of the nodes on each of the different triangulated faces, the population with internal nodes being effected from the relaxed grids, and then a second operation for relaxation in the positioning of these internal nodes.

3. Method according to the preceding claim, *characterised in that* the first relaxation operation is carried out by iterative phases of relaxation and projection.

4. Method according to one of claims 1 or 2 or 3, *characterised in that* a direction perpendicular to the intermediate grid is chosen as the direction for projection.

5. Method according to one of the preceding claims, *characterised in that* a mode of interpolation of transfinite type is used.

6. Method according to one of the preceding claims, *characterised in that* the positioning of the nodes of the elementary cells created is rearranged so as to obtain uniform meshes.

7. Method according to one of claims 1 to 5, *characterised in that* the positioning of the nodes of the elementary cells created is rearranged so as to obtain a given mode of progression for the size of the mesh.

8. Method according to one of the preceding claims, *characterised in that* all the blocks are reassembled.

Fig. 1

Fig. 2

Fig. 3

**Fig. 4**

**Fig. 5**

Fig. 6

Fig. 7

Fig. 8

Fig. 9

Fig. 10

Fig. 11

Fig. 12

Fig. 13

Fig. 14

Fig. 15

**FIG.16**

**FIG.17**